# EUROPÄISCHE PATENTANMELDUNG

(11) **EP 3 644 431 A1**
(43) Veröffentlichungstag der Anmeldung: **29.04.2020**
(21) Anmeldenummer: 18201772.3
(22) Anmeldetag: 22.10.2018
(51) Int. Cl.: H01M 10/44, G01R 31/367

(54) **VERFAHREN ZUM SIMULIEREN EINES BATTERIESYSTEMS DURCH VORGEBEN EINER DIFFUSIONSRATE WÄHREND EINES LADE-/ENTLADEPROZESSES SOWIE ELEKTRONISCHE RECHENEINRICHTUNG**

(71) Anmelder: Siemens Aktiengesellschaft, 80333 München (DE); Friedrich-Alexander-Universität Erlangen-Nürnberg, 91054 Erlangen (DE)
(72) Erfinder: Dicke, Paul, 91056 Erlangen (DE); Schricker, Barbara, 91058 Erlangen (DE); Steinbacher, Frank, 90542 Eckental (DE)

(57) **Zusammenfassung**

Die Erfindung betrifft ein Verfahren zum Simulieren eines Batteriesystems (3) mit zumindest einer virtuellen Spannungsquelle (4) des Batteriesystems (3) und zumindest einer virtuellen Filtereinrichtung (5) des Batteriesystems (3) mittels eines Simulationsmodells (1) einer elektronischen Recheneinrichtung (2), bei welchem die virtuelle Spannungsquelle (4) durch ein kinetisches Batteriemodell (6) mit einer vorgebebenen Übertrittsrate (k) und die Filtereinrichtung (5) mittels eines ersatzschaltbildbasierten Modells (7) simuliert werden, wobei die Übertrittsrate (k) während eines simulierten Ladeprozesses des Batteriesystems (3) in Abhängigkeit eines simulierten Ladestroms (i(t)) vorgegeben wird. Ferner betrifft die Erfindung eine elektronische Recheneinrichtung (2).

## Beschreibung

Die Erfindung betrifft ein Verfahren zum Simulieren eines Batteriesystems mit zumindest einer virtuellen Spannungsquelle des Batteriesystems und zumindest einer virtuellen Filtereinrichtung des Batteriesystems mittels eines Simulationsmodells einer elektronischen Recheneinrichtung. Bei dem Verfahren wird die virtuelle Spannungsquelle durch ein kinetisches Batteriemodell mit einer vorgebebenen Übertrittsrate und die Filtereinrichtung mittels eines ersatzschaltbildbasierten Modells simuliert. Ferner betrifft die Erfindung eine elektronische Recheneinrichtung.

Es ist bekannt, dass aus Zeitgründen und aus Kostengründen oftmals Batteriesysteme simuliert werden, um für einen jeweiligen Anwendungsfall des Batteriesystems entsprechende Daten für den Anwendungsfall generieren zu können. Insbesondere ist bekannt, dass das Betriebsverhalten unter gegebenen Anforderungen simuliert wird, um sich einen Überblick über potentielle Ausführungen und Dimensionierungen zu verschaffen. Dies setzt jedoch eine valide und hinreichend akkurate, modellhafte Abbildung des Batteriesystems voraus. Je nach Komplexität dessen sowie der Modellbildung kann diese Charakterisierung ebenfalls extrem zeit- und somit auch kostenintensiv sein.

Insbesondere ergibt sich die Problematik darin, dass trotz ihres ähnlichen Funktionsprinzips unterschiedliche Energiespeichertechnologien, wie beispielsweise Zellen auf Lithium-Ionen- oder Bleibasis sowie Fluss- und Hochtemperaturbatterien nur schwer so universell abbildbar sind, dass kein immenser Aufwand durch Parametrierung technologisch spezifischer Modellierungsansätze entsteht und trotzdem eine hinreichende Genauigkeit der Modelle durch Berücksichtigung verschiedener nicht-linearer Effekte des Zellverhaltens, wie beispielsweise Temperaturabhängigkeiten, Alterungsphänomene und Selbstentladung gewährleistet sind. Zudem müssen bei der Skalierung von Zell- auf Gesamtsystemebene oftmals parasitäre Peripherieverbraucher, wie zum Beispiel Pumpen, Heizungs- und Kühlungsvorrichtungen, sowie Betriebseinschränkungen wie zum Beispiel Wartungszyklen mitberücksichtigt werden, wodurch sich Rückkopplungseffekte auf das Verhalten der Einzelzellen ergeben.

In dem Stand der Technik sind bereits verschiedene Ansätze zur modellhaften Abbildung von Batteriesystemen bekannt. Jedoch haben diese oftmals den Nachteil, dass insbesondere nicht alle relevanten nicht-linearen Effekte dabei berücksichtigt werden. Des Weiteren sind die Lösungsvorschläge oftmals für Einzelzellen oder kleine Zellverbünde und nicht für ein gesamtes Batteriesystem nutzbar. Insbesondere werden die DC-seitigen Peripherien nicht bei äquivalenten Modellierungsansätzen mitberücksichtigt. Ferner ist bei den meisten gegebenen Modellen, insbesondere bei den KiBaM-Ansätzen gemäß dem Stand der Technik, bekannt, dass lediglich einzig Entladevorgänge, jedoch keine Ladevorgänge des Batteriesystems berücksichtigt werden, wodurch der Betrieb des Batteriesystems naturgemäß nicht vollumfänglich repräsentiert wird.

Insbesondere konzentrieren sich die KiBaM-Ansätze gemäß dem Stand der Technik auf die Erfassung der Laufzeit des Status des aktuellen Ladezustands (State of charge - SOC) oder des Strom-Spannungs-Verhaltens, wobei dies insbesondere oft nicht zeitgleich im Stand der Technik durchgeführt wird. Zudem ist für manche der im Stand der Technik bekannten Ansätze ein enormer Parametrierungsaufwand zu betreiben, welcher dem Ziel einer zeiteffizienten, simulativen Auslegung diametral entgegensteht.

Insbesondere sind aus dem Stand der Technik vier Modellierungsansätze bekannt. Beispielsweise finden elektrochemische oder analytische oder reine stochastische Modelle sowie Ersatzschaltbildmodelle Einzug in die Simulation von Batteriesystemen.

Elektrochemische Modelle zielen darauf ab, das chemische Verhalten der Zelle als Funktion sowohl der Zeit als auch des Raumes im höchstmöglichen Detailgrad wiederzugeben. Hierzu werden insbesondere Thermodynamik, Transporteigenschaften und Kinetik der Zelle durch mehrere gekoppelte, nicht-lineare Differentialgleichungen beschrieben. Den gekoppelten, partiell differenzierbaren Differenzialgleichungen werden meist in einem nummerischen Framework mit Hilfe von Finite-element-Methoden oder Galerkin-Methoden räumlich diskretisiert und die sich daraus ergebenden gewöhnlichen Differentialgleichungen durch iterative Verfahren gelöst. Dies ist insbesondere sehr rechenkapazitätsaufwändig.

Analytische Modellierungsansätze stellen Vereinfachungen elektrochemischer Modellkonzepte dar. Anstelle vieler komplexer Differentialgleichungen werden bei diesen elektrochemische Vorgänge in der Zelle durch wenige äquivalente mathematisch-physikalische Ausdrücke reduzierter Ordnung angenähert und demnach in einem höheren Abstraktionsgrad beschrieben. Jedoch bilden gerade aufgrund der Einfachheit des Formwerkes diese Modelle eine geringere Exaktheit ab.

Die Grundidee von Ersatzschaltbildmodellen (Electrical Circuit Models - ECM) ist die äquivalente Darstellung des Zellverhaltens durch elektrische Komponenten mit Hilfe einer Ersatzschaltbild-Analogie. Physikalische Eigenschaften des Batteriesystems werden somit durch elektrische Bauelemente beschrieben. Beispielsweise wird das Spannungsverhalten eines Energiespeichers durch eine Verschaltung von Kondensatoren und Widerständen wiedergegeben. Je genauer jedoch mittels des Ersatzschaltbildmodels das Batteriesystem modelliert werden soll, desto größer wird der Konfigurationsaufwand.

Leitgedanke der meisten etablierten stochastischen Modelle ist den Ladezustand der Speichereinrichtung zum diskreten Zeitpunkt als N+1-fache Niveauanzahl einer Markov-Kette abzubilden. So kann der SOC in jedem untersuchten Zeitschritt vom aktuellen Niveau mit spezifisch ermittelten Wahrscheinlichkeiten zu benachbarten Niveaus übergehen.

Ferner existieren im Stand der Technik bereits Hybridmodelle für entsprechende elektrochemische Speicher, welche auch "Mixed Models" genannt werden. Diese setzen sich insbesondere aus entsprechenden Kategorien der vorausgehend genannten Modellierungsarten zusammen. Beispielsweise offenbart T. Kim and W. Qiao: "A Hybrid Battery Model Capable of Capturing Dynamic Circuit Characteristics and Nonlinear Capacity Effects", 2012 IEEE Power and Energy Society General Meeting, San Diego, CA, 2012 ein Modell, das ebenfalls zum Teil auf dem Ansatz eines kinetischen Batteriemodells fußt, hier kombinieren die Autoren es mit einem ersatzschaltbildbasierten Modellkonzept. Insbesondere beschreibt diese Offenbarung lediglich ein Einzelzellmodell. Des Weiteren offenbart dieser Stand der Technik nur ein Entladen des Batteriespeichers.

Aufgabe der vorliegenden Erfindung ist es, ein Verfahren sowie eine elektronische Recheneinrichtung zu schaffen, mittels welchen technologische Eigenheiten sowie nicht-lineares Betriebsverhalten eines Batteriesystems zuverlässig simuliert werden können.

Diese Aufgabe wird durch ein Verfahren sowie durch eine elektronische Recheneinrichtung gemäß den unabhängigen Patentansprüchen gelöst. Vorteilhafte Ausgestaltungsformen sind in den Unteransprüchen angegeben.

Ein Aspekt der Erfindung betrifft ein Verfahren zum Simulieren eines Batteriesystems mit zumindest einer virtuellen Spannungsquelle des Batteriesystems und zumindest einer virtuellen Filtereinrichtung des Batteriesystems mittels eines Simulationsmodells einer elektronischen Recheneinrichtung, bei welchem die virtuelle Spannungsquelle durch ein kinetisches Batteriemodell mit einer vorgegebenen Übertrittsrate und die Filtereinrichtung mittels eines ersatzschaltbildbasierten Modells simuliert werden.

Es ist vorgesehen, dass die Übertrittsrate während eines simulierten Ladeprozesses des Batteriesystems in Abhängigkeit eines simulierten Ladestroms vorgegeben wird.

Mit anderen Worten handelt es sich bei dem vorgestellten Verfahren um ein DC-seitiges Konzept einer Hybridmodellierung aus Kombinationen von einem analytischen, nämlich dem kinetischen Batteriemodell, und einem ersatzschaltbildbasierten (ECM)-Ansatz.

Hierdurch ist es ermöglicht, dass nicht nur Einzelzellen, sondern die Energiespeichereinrichtung, mit anderen Worten das Batteriesystem auf Systemebene abgebildet werden kann. Die Verknüpfung des kinetischen Batteriemodells, welches eine detaillierte Berücksichtigung eines Rate-Capacity-Effects (RCE) und eines Recovery Effects (RE) realisiert, mit dem ersatzschaltbildbasierten Modell, das eine akkurate Wiedergabe des Leistungsflusses sowie der Strom- und Spannungscharakteristik der Speichereinheit gewährleistet, realisiert, dass den Nachteilen gemäß dem Stand der Technik in einem beherrschbaren Maß an Komplexität und Parametrisierungsaufwand Rechnung getragen wird.

Wenn nachfolgend von Spannungsquelle oder Filtereinrichtung gesprochen wird, so ist darunter die virtuelle Spannungsquelle und die virtuelle Filtereinrichtung zu verstehen.

Das kinetische Batteriemodell fußt dabei auf einer Überführung des Lade-/Entladevorgangs der Zelle auf eine hydraulische Analogie. Es wird dabei angenommen, dass sich die Ladungsträger des Energiespeichers auf zwei Becken verteilen, welche durch einen Zufluss miteinander verbunden sind.

In einem Becken des kinetischen Batteriemodells befinden sich alle verfügbaren beziehungsweise extrahierbaren, im anderen alle gebundenen beziehungsweise nicht extrahierbaren Ladungsträger. Ist eine Last angeschlossen, so wird diese aus dem Becken der extrahierbaren Ladung mit Strom gespeist. Da der Durchfluss vom Becken der gebundenen zum Becken der extrahierbaren Ladungsträger limitiert ist, bildet sich ein ungleicher Füllstand zwischen den Becken aus. Der Höhenunterschied zwischen den Becken wird kontinuierlich ausgeglichen, nivelliert sich erst in Ruhephasen, sprich Zeiten ohne Lastanschluss. Aus anfänglicher Ladungsverteilung auf die Becken, Höhenunterschiede der Beckenfüllstände, Ladestrom und Ventildurchlässigkeit können zwei Differentialgleichungen abgeleitet werden, die Auskunft über die Änderung des Ladungsinhaltes der Becken geben. So kann mittels des kinetischen Batteriemodells einerseits auf sehr schlüssige und intuitive Art und Weise das Auftreten des Recovery Effects veranschaulicht werden und andererseits, ist man insbesondere durch die Erweiterung mit dem ersatzschaltbildbasierten Modell, auch in der Lage die Spannungsverläufe der Zelle wiederzugeben.

Insbesondere ist es dadurch ermöglicht, dass beispielsweise Bleibatterien beziehungsweise Lithium-Ionen-Batterien zuverlässig simuliert werden können. Diese Aufzählung der möglichen Batterie- beziehungsweise Akkumulatorarten ist lediglich beispielhaft zu verstehen und keinesfalls abschließend.

Bei dem Rate Capacity Effect handelt es sich um ein Phänomen, dass die extrahierbare Kapazität elektrischer Zellen mit steigendem Entladestrom nicht-linear abnimmt. Der so genannten Recovery Effect beschreibt die Gesetzmäßigkeit, dass gebundene Kapazität der Speichereinheit in Phasen ohne oder sehr reduzierten Lastanschlusses, sprich ohne Stromentnahme, zu ungebundener - wieder extrahierbarer - Kapazität übergeht, also quasi "zurückgewonnen" werden kann.

Erfindungsgemäß wurde das kinetische Batteriemodell dahingehend überarbeitet, dass einerseits bei Übergang von einem konstanten Strom (Constant-Current - CC) Entladephase zu einer konstanten Strom-Ladephase (CC-Ladephase) eine Umparametrierung und andererseits zur Wahrung der Konsistenz der zugrundeliegenden Modelltheorie eine Ladungsträgerumverteilung zwischen den Becken stattfindet. Äquivalente Umparametrierung und Ladungsumverteilung kommt beim Wechsel von einer Constant-Voltage (CV) Ladung zur Constant-Current Entladephase zum Einsatz. Ferner kann ein CC-Entladen zu einem CV-Entladen parametriert werden. Ebenfalls kann die Umparametrierung bei einer CV-Entladung zu einem CC-Laden durchgeführt werden. Somit wurden bisherige akademische Überlegungen der Literatur in eine konkrete, praktikable Methodik überführt.

Weiterhin wurde zusätzlich eine Umparametrierung innerhalb des Ladeprozesses implementiert, nämlich bei Wechsel von der Constant-Current zu Constant-Voltage-Ladephase, um die Dauer der exponentiellen Stromabnahme der Constant-Voltage-Phase bis zum Erreichen des unteren Schwellwerts abzubilden. Mittels der Übertrittsrate kann in dieser Constant-Voltage-Phase eine Anpassung an die realen Messdaten durchgeführt werden. Es ist vorgesehen, dass zur Erfassung im Modell die Übertrittsrate während eines simulierten Ladeprozesses des Batteriesystems in Abhängigkeit des simulierten Ladestroms vorgegeben wird. Insbesondere wird der Zusammenhang zwischen der Übertrittsrate und dem Ladestrom aus idealisierten Übertrittsraten-Werten und Ladeströmen vorgegeben. Beispielsweise kann diese in Abhängigkeit vom Fabrikat des Batteriesystems vorgegeben werden.

Mit anderen Worten ist die erfindungsgemäße Idee, dass das Spannungs-Stromverhalten durch das ersatzschaltbildbasierte Modell ermittelt wird, während das eingebettete kinetische Batteriemodell für die Berechnung der Laufzeit und des momentanen Ladezustands zuständig ist. Genauer gesagt wird mit Hilfe des kinetischen Batteriemodells die Menge an Ladungsträgern bestimmt, die nicht extrahierbar sind, worüber die aktuelle Kapazität des Energiespeichers beziehungsweise der Spannungsquelle und daraus der Ladungszustand zum Zeitpunkt t bestimmen lässt. Mit anderen Worten ist vorgesehen, dass das kinetische Batteriemodell als quasi Bauelement im ersatzschaltbildbasierten Modell anstelle einer Spannungsquelle als Ladungsspeicher definiert wird, welches den Ladungszustand unter Berücksichtigung des Rate Capacity Effects und des Recovery Effects ermittelt.

Bevorzugt ist vorgesehen, dass mittels der Simulation die Klemmspannung der abgebildeten Batteriezelle beziehungsweise des Batteriesystems simuliert werden kann.

Im Vergleich zu einem reinen ersatzschaltbildbasierten Modell weist das vorgestellte Simulieren des Batteriesystems eine höhere Fidelität bei der Wiedergabe von Entladungen mit variablen Lade-/Entladeströmen oder Lade-/Entladeleistungen sowie gepulster Ladung/Entladung auf, sowohl bei Laufzeitberechnung als auch bei Simulation des Spannungs-Stromverlaufs und kann außerdem mit geringen Simulationszeiten aufwarten.

Bevorzugt kann vorgesehen sein, dass das Modellierungskonzept so gestaltet ist, dass eine stufenweise Implementierung der Modellfunktionen möglich ist, das heißt es ist eine Baukasten-Struktur gegeben, die an- beziehungsweise abwählbare Funktionalitätsumfänge realisieren kann. Die baukastenähnliche Konzeptionierung ermöglicht es in jeder Simulationsphase lauffähige Zwischenergebnisse bereitzustellen und in den finalen Modellversionen durch an- beziehungsweise abwählbaren Funktionsumfang die Komplexität der Simulation flexibel anzupassen, wodurch die Simulationsdauer beeinflusst werden kann. Der Parametrierungsaufwand wird aufgrund standardisierter Messmethodik für jedes System so gering wie möglich gehalten. Von einer Batteriezelle ausgehend kann die Modellierung auf Gesamtsystemebene hochskaliert werden, indem die internen Verschaltungen der Einzelzellen beziehungsweise Spannungsquellen sowie parasitärer Peripherien berücksichtigt werden. Somit realisiert die beschriebene Herangehensweise leistungsfähige, verhältnismäßig leicht parametrierbare und hinreichend exakte Softwareabbildungen verschiedener Speichertypen.

Weiterhin bevorzugt kann vorgesehen sein, dass bei einer Anpassung der Übertrittsrate, insbesondere bei einem Moduswechsel, auch die Parameter c und C mit angepasst werden.

Gemäß einer vorteilhaften Ausgestaltung wird die Übertrittsrate aktuell an den aktuell simulierten Lade-/Entladestrom angepasst. Insbesondere wird die Übertrittsrate während einer konstanten Spannungsphase (Constant Voltage - CV) bestimmt. Mit anderen Worten ist das kinetische Batteriemodell dahingehend angepasst, dass eine Modifikation dessen stattfindet, nämlich die Anpassung des Übertrittsratenwerts in der Constant-Voltage-Phase gemäß des Ladestroms in jedem Zeitschritt. Hieraus kann die Dauer der Constant-Voltage-Ladephase der Zelle exakter bestimmt werden als durch bisherige akademische Überlegungen einer Fit-Annäherung mit Hilfe einer rudimentären e-funktion. Somit wurde der Ladezustand und Laufzeit-bestimmende Part des Gesamtmodellierungskonzeptes modifiziert hin zu einer praxisnahen und anwendungstauglichen Variante des kinetischen Batteriemodells. Insbesondere kann in jedem Zeitschritt der Simulation, beispielsweise eine millisekündliche oder eine sekündliche, je nach gewünschter Auflösung, Anpassung des Übertrittsratenwerts während der Simulation durchgeführt werden.

Es hat sich weiterhin als vorteilhaft erwiesen, wenn die Übertrittsrate in Abhängigkeit einer polynomiellen oder einer exponentiellen oder einer hyperbolischen Funktion für die Übertrittsrate bestimmt wird. Insbesondere kann dadurch der Zusammenhang zwischen der Übertrittsrate und dem Ladestrom aus den idealisierten k-Werten und Ladeströmen am Ende der Constant-Current-Ladephase durch die jeweilige Fit-Funktion ermittelt werden. Dadurch kann insbesondere eine Vielzahl von unterschiedlichen Zelltypen wiedergegeben werden. Somit ist eine Simulation von unterschiedlichen Batteriesystemen mit unterschiedlichen elektrischen Spannungsquellen ermöglicht. Dies führt zu einer hochfunktionellen Simulation des Batteriesystems mittels der elektronischen Recheneinrichtung. Insbesondere kann dadurch eine viel präzisere Erfassung der Dauer der Constant-Voltage-Phase durchgeführt werden.

In einer weiteren vorteilhaften Ausgestaltungsform wird die Übertrittsrate in Abhängigkeit eines zu simulierenden Batteriesystems, insbesondere in Abhängigkeit eines Batteriezellentyps, bestimmt. Insbesondere können entsprechende Parameter des Batteriesystems, insbesondere entsprechende Parameter des Batteriezellentyps, zu einer unterschiedlichen Simulation führen. Dadurch kann mittels der elektronischen Recheneinrichtung hochfunktionell eine Mehrzahl von unterschiedlichen Spannungsquellen simuliert werden. Insbesondere ist es dadurch ermöglicht, dass kostengünstig und zeitsparend unterschiedliche Batteriesysteme simuliert werden können. Beispielsweise können Bleibatterien oder Lithium-Ionen-Batterien durch Vorgabe der entsprechenden Parameter zuverlässig simuliert werden. Diese Energiespeicherangaben sind rein beispielhaft und keinesfalls abschließend zu betrachten. Des Weiteren ist dadurch hochfunktionell eine realitätsnahe Simulation der unterschiedlichen Batteriesysteme ermöglicht. Dadurch kann eine Vielzahl von unterschiedlichen Energiespeichertypen mittels der Simulation simuliert werden.

Es hat sich weiterhin als vorteilhaft erwiesen, wenn die Filtereinrichtung mit zumindest einem Tiefpassfilter, insbesondere mit zumindest zwei Tiefpassfiltern, simuliert wird. Der Tiefpassfilter wird auch als RC-Glied bezeichnet. Insbesondere kann auch eine Vielzahl von Tiefpassfiltern simuliert werden. Als Vielzahl ist insbesondere mehr als zwei zu verstehen. Insbesondere ist die Anzahl an Tiefpässen jedoch je nach abzubildender zeitlicher Auflösung definierbar. Falls beispielsweise das Zellverhalten nur bis zu einer Auflösung von einer Sekunde betrachtet werden soll, ist es möglich, dass ein RC-Glied ausreicht, welches nur das transiente Verhalten längerer Zeiträume, insbesondere größer als 1 Sekunde, wiedergibt. Ist beispielsweise eine hochauflösende Analyse erforderlich, so kann das Modell um weitere RC-Glieder mit kleineren Zeitkonstanten erweitert werden. Dabei kann hochfunktionell mit unterschiedlichen Tiefpassfiltern eine realitätsnahe Simulation des Batteriesystems durchgeführt werden.

Gemäß einer weiteren vorteilhaften Ausgestaltungsform werden durch Parametrierung der Filtereinrichtung eine Temperaturabhängigkeit und/oder ein Selbstentladungseffekt simuliert. Beispielsweise kann über Vermessungen der Zellen in festen Temperaturintervallen der thermische Einfluss auf die jeweiligen elektrischen Komponenten des ersatzschaltbildbasierten Modells bestimmt werden. Durch das auf diese Art und Weise aufgespannte Datengitter kann die Parametrierung für jede Temperatur, falls nicht exakt auf den Messlinien liegend, durch Inter- beziehungsweise Extrapolation erfolgen. Dadurch ist es ermöglicht, dass auch nicht-lineare Effekte, welche Einfluss auf das Verhalten des Batteriesystems haben, bei der Simulation mitberücksichtigt werden können. Dadurch ist eine realitätsnahe Simulation des Batteriesystems ermöglicht.

Ferner hat es sich als vorteilhaft erwiesen, wenn eine zyklische Zellalterung des Batteriesystems und/oder eine kalendarische Zellalterung durch ein Degradieren eines ersten Beckens des kinetischen Batteriemodells und/oder durch ein Degradieren eines zweitens Beckens des kinetischen Batteriemodells simuliert werden. Insbesondere kann dies beispielsweise modellhaft durch das Degradieren der Beckenbreiten der jeweiligen Becken, welche insbesondere durch die entsprechenden Konstanten c beziehungsweise 1-c, wobei c der jeweiligen Beckenbreite entspricht, innerhalb des kinetischen Batteriemodells dargestellt sind, simuliert werden. Insbesondere sind somit die Ausgangsfüllstände der Becken mit einbezogen, wodurch dann wiederum die zyklische Zellalterung und/oder die kalendarische Zellalterung innerhalb des kinetischen Batteriemodells mitberücksichtigt werden kann, wodurch eine zuverlässige und realitätsnahe Simulation des Batteriesystems realisiert werden kann.

In einer weiteren vorteilhaften Ausgestaltungsform wird eine zyklische Zellalterung des Batteriesystems und/oder eine kalendarische Zellalterung des Batteriesystems durch eine Erhöhung zumindest eines ohmschen Widerstands der Filtereinrichtung simuliert. Somit ist es ermöglicht, dass auch über das ersatzschaltbildbasierte Modell die zyklische Zellalterung und/oder die kalendarische Zellalterung mit simuliert werden kann. Dadurch kann eine präzise und realitätsgetreue Simulation des Batteriesystems ermöglicht werden.

Ebenfalls vorteilhaft ist, wenn bei der Simulation des Batteriesystems zumindest eine Auswirkung zumindest eines Peripheriegeräts für das Batteriesystem berücksichtigt wird. Insbesondere, da die verschiedenen Batteriesysteme letztendlich in die Simulation größerer Energiesystemverbünde eingebettet werden sollen, ist es erforderlich, auch zugehörige Peripheriegeräte und Betriebsweisen der Zelltypen in den Modellen zu betrachten. Der Zelltyp kann insbesondere als Spannungsquelle angesehen werden. Bei bisher vorhandenen Ansätzen dieser Modellierung wird das meist nicht berücksichtigt, sondern die Einzelzelle abgekoppelt von diesen betrachtet. Jedoch interessiert den Anwender vornehmlich das Gesamtsystemverhalten unter Berücksichtigung der Wechselwirkung mit verbauten Zusatzsystemen und nicht das isolierte Einzelzellverhalten. Hierbei wird das Modell um die erforderlichen Gerätschaften zum automatisierten Betrieb erweitert, wie beispielsweise Pumpen, Heizungs- und Kühlungsvorrichtungen oder auch Batteriemanagementsysteme als jeweiliges Peripheriegerät. Ferner kann auch eine Vielzahl von Peripheriegeräten, insbesondere von unterschiedlich ausgebildeten Peripheriegeräten, simuliert werden. Ferner kann hierbei ebenfalls simuliert werden, dass auch zyklische Wartungs- und Instanthaltungsintervalle mitberücksichtigt werden können. Dadurch kann realitätsnah und präzise die Simulation des Batteriesystems durchgeführt werden.

Ein weiterer Aspekt der Erfindung betrifft ein Computerprogrammprodukt, umfassend Befehle, die bei der Ausführung des Programms durch einen Computer diesen veranlassen, die Schritte des Verfahrens nach dem vorhergehenden Aspekt auszuführen.

Ein weiterer Aspekt der Erfindung betrifft eine elektronische Recheneinrichtung mit einem Computerprogrammprodukt nach dem vorhergehenden Aspekt, wobei die elektronische Recheneinrichtung zum Durchführen eines Verfahrens nach dem vorhergehenden Aspekt ausgebildet ist. Insbesondere wird das Verfahren mittels der elektronischen Recheneinrichtung durchgeführt.

Vorteilhafte Ausgestaltungsformen des Verfahrens sind als vorteilhafte Ausgestaltungsformen der elektronischen Recheneinrichtung anzusehen, wobei die elektronische Recheneinrichtung dazu gegenständliche Merkmale aufweist, welche eine Durchführung des Verfahrens oder eine vorteilhafte Ausgestaltungsform davon ermöglichen.

Die Erfindung wird nun anhand der beigefügten Zeichnungen näher erläutert, in denen zeigen:
- FIG 1: ein schematisches Blockschaltbild einer Ausführungsform eines Simulationsmodells; und
- FIG 2: ein schematisches Ladestrom-Übertrittsraten-Diagramm gemäß einer Ausführungsform.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden. Durch diese Beschreibung erfolgt keine Beschränkung der Erfindung auf diese Ausführungsbeispiele. In verschiedenen Figuren sind gleiche Komponenten mit identischen Bezugszeichen versehen. Die Figuren sind in der Regel nicht maßstäblich.

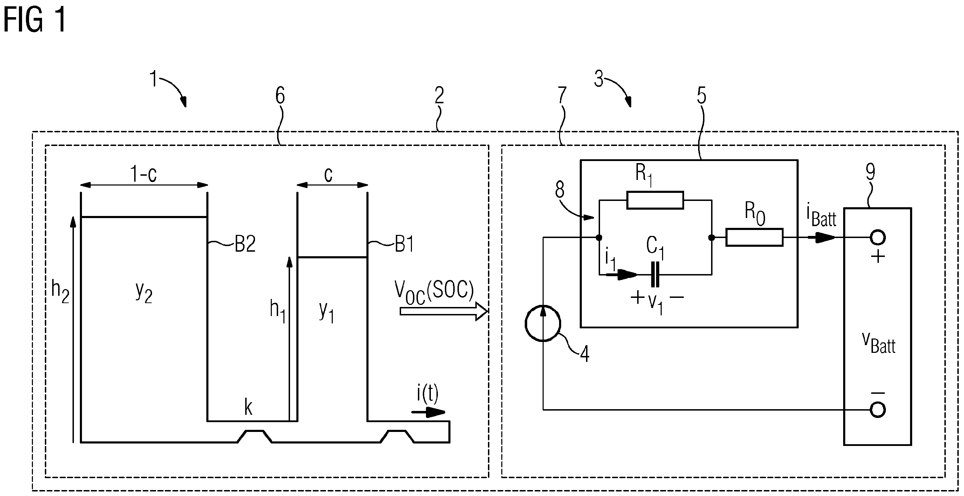

FIG 1 zeigt in einem schematischen Blockschaltbild eine Ausführungsform eines Simulationsmodells 1. Das Simulationsmodell 1 kann insbesondere als Computerprogrammprodukt auf einer elektronischen Recheneinrichtung 2 abgearbeitet werden. Insbesondere ist vorgesehen, dass ein Batteriesystem 3 mit zumindest einer virtuellen Spannungsquelle 4 des Batteriesystems 3 und mit zumindest einer virtuellen Filtereinrichtung 5 des Batteriesystems 3 mittels des Simulationsmodells 1 der elektronischen Recheneinrichtung 3 simuliert werden kann. Die virtuelle Spannungsquelle 4 ist durch ein kinetisches Batteriemodell 6 mit einer vorgegebenen Übertrittsrate k und die Filtereinrichtung 5 ist mittels eines ersatzschaltbildbasierten Modells 7 simuliert. Es ist vorgesehen, dass die Übertrittsrate k während eines simulierten Lade-/ Entladeprozess des Batteriesystems 3 in Abhängigkeit eines simulierten Ladestroms i(t) vorgegeben wird.

Ferner ist insbesondere vorgesehen, dass die Übertrittsrate k aktuell an den aktuell simulierten Ladestrom i(t), insbesondere während einer konstanten Spannungsphase (Constant Voltage - CV), angepasst wird.

Ferner kann insbesondere vorgesehen sein, dass die Übertrittsrate k in Abhängigkeit eines zu simulierenden Batteriesystems 3, insbesondere in Abhängigkeit eines Batteriezellentyps, bestimmt wird. Ferner kann vorgesehen sein, dass die Filtereinrichtung 5 mit zumindest einem Tiefpassfilter 8, insbesondere mit zumindest zwei Tiefpassfiltern 8, simuliert wird.

Ferner kann insbesondere vorgesehen sein, dass durch Parametrierung der Filtereinrichtung 5 eine Temperaturabhängigkeit und/oder ein Selbstentladungseffekt simuliert werden kann. Insbesondere kann ebenfalls vorgesehen sein, dass eine zyklische Zellalterung und/oder eine kalendarische Zellalterung des Batteriesystems 3 durch ein Degradieren eines ersten Beckens B1 mit einer ersten Ladungsmenge y1 des kinetischen Batteriemodells 6 und/oder durch ein Degradieren eines zweitens Beckens B2 mit einer zweiten Ladungsmenge y2 des kinetischen Batteriemodells 6 simuliert werden. Ferner kann vorgesehen sein, dass eine zyklische Zellalterung der Spannungsquelle 4 und/oder eine kalendarische Zellalterung der Spannungsquelle 4 durch eine Erhöhung zumindest eines ohmschen Widerstands R₀ der Filtereinrichtung 5 simuliert werden kann.

Ferner kann vorgesehen sein, dass bei der Simulation des Batteriesystems 3 zumindest eine Auswirkung zumindest eines Peripheriegeräts 9 für das Batteriesystem 3 berücksichtigt wird.

Mit anderen Worten zeigt die FIG 1 ein DC-seitiges Konzept einer Hybridmodellierung aus der Kombination des kinetischen Batteriemodells 6 und des ersatzschaltbildbasierten Modells 7 sowie eine vereinfachte Berücksichtigung zumindest eines peripheren Verbrauchers als Peripheriegerät 9. Hierdurch ist es ermöglicht, dass nicht nur Einzelzellen, des Batteriesystems 3, sondern die Speichereinheit auf Systemebene abgebildet werden kann. Die Verknüpfung des kinetischen Batteriemodells 6, welches eine detaillierte Berücksichtigung des Recovery Effects und des Rate Capacity Effects realisiert, mit dem ersatzschaltbildbasierten Modell 7, das eine akkurate Wiedergabe des Leistungsflusses sowie der Strom- und Spannungscharakteristik der Speichereinheit realisiert, hat den Vorteil, dass in einem beherrschbaren Maß an Komplexität und Parametrisierungsaufwand zuverlässig das Batteriesystem 3 mit der Speichereinheit simuliert werden kann. Das kinetische Batteriemodell 6 fußt dabei auf einer Überführung des Lade-/Entladevorgangs der Zelle auf eine hydraulische Analogie. So wird angenommen, dass sich die Ladungsträger des Speichers auf zwei Becken B1, B2 verteilen, welche durch einen Zufluss, welcher durch die Übertrittsrate k beschrieben ist, miteinander verbunden sind. In einem ersten Becken B1 befinden sich alle verfügbaren beziehungsweise extrahierbaren, im anderen zweiten Becken B2 alle gebundenen beziehungsweise nichtextrahierbaren Ladungsträger. Ist eine Last angeschlossen, so wird diese aus dem ersten Becken B1 der extrahierbaren Ladung mit Strom gespeist. Da der Durchfluss vom zweiten Becken B2 der gebundenen zum ersten Becken B1 der extrahierbaren Ladungsträger limitiert ist, bildet sich ein ungleicher Füllstand, zwischen den Becken B1, B2 aus, welche im vorliegenden Beispiel durch die unterschiedlichen Höhen h1 des ersten Beckens B1 und h2 des zweiten Beckens B2 dargestellt ist. Der Höhenunterschied zwischen den Becken B1, B2 wird kontinuierlich ausgeglichen, stellt sich jedoch erst in Ruhephasen ein, sprich in Zeiten ohne Lastanschluss. Aus anfänglicher Ladungsverteilung auf die Becken B1, B2, Höhenunterschied der Beckenfüllstände h1, h2, Ladestrom i(t) und Ventildurchlässigkeit, welche durch die Übertrittsrate k dargestellt ist, werden zwei Differentialgleichungen abgeleitet, die Auskunft über die Änderung des Ladungsinhalts der Becken B1, B2 geben. So veranschaulicht das kinetische Batteriemodell 6 einerseits auf sehr schlüssige und intuitive Art und Weise das Auftreten des Recovery Effects und ist andererseits, durch die Erweiterung mit dem ersatzschaltbildbasierten Modell 7, was dann auch als erweitertes kinetisches Batteriemodell bezeichnet werden kann, auch in der Lage die Spannungsverläufe der Zelle wiederzugeben. Dies ermöglicht insbesondere sowohl die Simulation beispielsweise eines Bleispeichers, als auch eines Lithium-Ionen-Akkumulators. Es sind auch weitere Simulationen von weiteren Energiespeichern möglich. Diese Aufzählung ist rein beispielhaft und keinesfalls abschließend zu betrachten.

Lange Zeit wurde im Stand der Technik angenommen, dass das kinetische Batteriemodell 6 beim Ladeprozess auf gleiche Weise wie beim Endladeprozess parametriert werden kann, und sich beim Betriebsmoduswechsel alleinig die Stromflussrichtung ändert. Mittlerweile hat es sich herausgestellt, dass dies allerdings nicht realitätskonform ist. Auf Basis dessen wurde das kinetische Batteriemodell 6 dahingehend überarbeitet, dass einerseits bei Übergang von der Constant-Current (CC) Entladephase zur Constant-Current Ladephase eine Umparametrierung und andererseits zur Wahrung der Konsistenz der zugrundeliegenden Modelltheorie eine Ladungsträgerumverteilung zwischen den Becken B1, B2 stattfindet. Gleiche Umparametrierung und Ladungsträgerumverteilung kommt beim Wechsel von Constant-Voltage (CV) Lade- zu CC-Entladephase zum Einsatz. Ferner kann ein CC-Entladen zu einem CV-Entladen parametriert werden. Ebenfalls kann die Umparametrierung bei einer CV-Entladung zu einem CC-Laden durchgeführt werden. Somit wurden bisherige akademische Überlegungen der Literatur in eine konkrete, praktikable Methodik überführt.

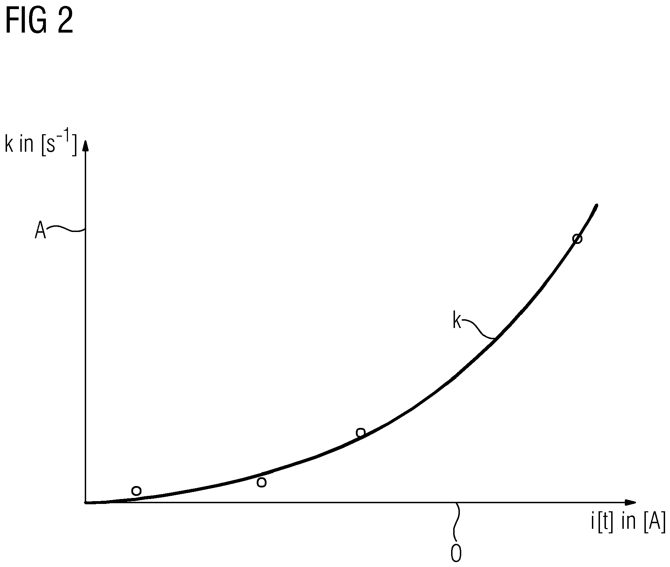

Weiterhin wurde eine zusätzliche Umparametrierung innerhalb des Ladeprozesses implementiert. Nämlich beim Wechsel von Constant-Current zu Constant-Voltage-Ladephase, um die Dauer der exponentiellen Stromabnahme der Constant-Voltage-Phase zum Erreichen des unteren Schwellwerts abzubilden. Nach der Theorie gemäß dem Stand der Technik des kinetischen Batteriemodells 6 kann die Übertrittsrate k in dieser Constant-Voltage-Phase durch einen Fit an die realen Messdaten mit Hilfe einer einfachen e-Funktion mit nur einer Variablen erfasst werden, welche wieder in die Übertrittsrate k umgerechnet werden kann. Jedoch ergibt sich durch diese sehr rudimentäre Fit-Funktion ein signifikanter Fehler in der Bestimmung der tatsächlichen Laufzeit. Insbesondere werden entsprechende Schwellwerte bei dem Ladeprozess bereits früh erreicht, was eine inadäquate Laufzeitbestimmung im Simulationsmodell 1 bedingen würde. Hierzu ist nun erfindungsgemäß vorgesehen, dass zur korrekten Erfassung im Simulationsmodell 1 eine, insbesondere sekündliche, Anpassung der Übertrittsrate k in Abhängigkeit des Ladestroms i(t) vorgenommen wird. Der Zusammenhang k (I_{CH}) wird aus idealisierten Übertrittsratenwerten und Ladeströmen i(t) am Ende der Constant-Voltage-Ladephase durch eine polynomielle, exponentielle oder hyperbolische Funktion ermittelt (FIG 2), wobei die FIG 2 lediglich exemplarisch für einen Zelltyp wiedergegeben ist. Die genaue Abhängigkeit kann dabei vom Typ der Batteriezelle und dem genauen Fabrikat abhängen. Insbesondere kann hierzu eine wesentlich präzisere Erfassung der Dauer der Constant-Voltage-Phase simuliert werden.

FIG 1 zeigt insbesondere den schematischen Aufbau des entwickelten Gesamtmodellierungsansatzes. Das Spannungs-StromVerhalten wird durch das ersatzschaltbildbasierte Modell 7 ermittelt, während der eingebettete kinetische Batteriemodellansatz für die Berechnung der Laufzeit und des momentanen Ladezustands (State of Charge - SOC) zuständig ist. Dieser ist ebenfalls durch die Spannung V_{OC}(SOC) in der FIG 1 dargestellt. Genauer gesagt wird mit Hilfe des kinetischen Batteriemodells 6 die Menge an Ladungsträgern bestimmt, die nicht extrahierbar sind, worüber sich dann die aktuelle Kapazität des Speichers und daraus der SOC zum Zeitpunkt t bestimmen lässt. Das kinetische Batteriemodell 6 wird also quasi als Bauelement im ersatzschaltbildbasierten Modell 7 anstelle der Spannungsquelle 4 als Ladungsspeicher definiert, welches den SOC unter Berücksichtigung des Rate Capacity Effects und des Recovery Effects ermittelt. Daran anknüpfend werden die restlichen Bauelemente, insbesondere die Filtereinrichtung 5 sowie beispielsweise ein ohmscher Wiederstand R₀ sowie Widerstände R₁ und Kondensatoren C₁ als Funktion des SOC definiert, worüber schlussendlich dann die Klemmspannung V_{Batt} der abgebildeten Zelle simuliert werden kann. Insbesondere kann auch ein Klemmstrom i_{Batt} simuliert werden. Im Vergleich zur reinen ersatzschaltbildbasierten Modellierung weist das vorgestellte erfindungsgemäße Verfahren eine höhere Fidelität bei der Wiedergabe von Ladungen/Entladungen mit variablen Strömen und Leistungen sowie gepulster Entladung auf, sowohl bei Laufzeitberechnung, als auch bei Simulation des Spannungs-Stromverlaufs und kann außerdem mit geringen Simulationszeiten aufwarten.

Das Simulationsmodell 1 ist so gestaltet, dass eine stufenweise Implementierung der Modellfunktionen möglich ist, das heißt, es ist eine Baukasten-Struktur gegeben, die einen an- und abwählbaren Funktionalitätsumfang realisieren kann. Insbesondere kann beispielsweise das Simulationsmodell 1 durch Berücksichtigen der verschiedenen nicht-linearen Effekte funktional erweitert werden. Hieraus können dann die ladezustandsabhängige Leerlaufspannung der Zelle sowie die anderen, ebenso SOC-dependenten, elektrischen Komponenten des Ersatzschaltbildes parametriert und in dem ersatzschaltbildbasierten Modell 7 simuliert werden. Insbesondere können nun allerdings auch Entlade- und Ladevorgänge der Zelle simuliert werden. Dazu werden die Modellparameter gemäß der Stromrichtung automatisch umparametrisiert. Erst so ist es möglich, die abgebildete Technologie im vollen Betriebsumfang zu betrachten und Leistungsprofile beliebiger Länge und Ausprägung gemäß den Betriebsanforderungen zu simulieren. Außerdem wurde ein Steuerungsalgorithmus zur Umsetzung einer Constant-Voltage-Ladung implementiert.

Ferner zeigt die FIG 1, dass das ersatzschaltbildbasierte Modell 7 durch eine Topologie mit einem RC-Glied repräsentiert werden kann, wobei dies wiederum durch den Tiefpass 8 vorliegend abgebildet ist. Im Tiefpass 8 wird insbesondere eine Filterspannung V₁ sowie ein Filterstrom i₁ erreicht. Die genaue Anzahl an Tiefpässen 8 ist jedoch je nach auszubildender zeitlicher Auflösung frei definierbar. Falls das Zellverhalten nur bis zu einer Auflösung von einer Sekunde betrachtet werden soll, so ist es möglich, dass ein RC-Glied ausreicht, welches nur das transiente Verhalten längerer Zeiträume (größer als 1 Sekunde) wiedergibt. Ist eine hochauflösendere Analyse erforderlich, so kann das ersatzschaltbildbasierte Modell 7 um weitere RC-Glieder mit kleineren Zeitkonstanten erweitert werden.

Insbesondere kann vorgesehen sein, dass sich mittels der Filtereinrichtung 5 die Temperaturabhängigkeit beziehungsweise Selbstentladungseffekte des Batteriesystems 3 im Simulationsmodell 1 integrieren lassen. Über Vermessung der Zellen in festen Temperaturintervallen kann der thermische Einfluss auf die Komponenten des ersatzschaltbildbasierten Modells 6 bestimmt werden. Durch das auf diese Art und Weise aufgespannte Datengitter kann die Parametrierung für jede Temperatur, falls nicht exakt auf den Messlinien liegend, durch Interbeziehungsweise Extrapolation erfolgen. Auf nächster Stufe werden Betrachtungen von Zellalterung zyklischer und kalendarischer Natur in das Simulationsmodell 1 mit einfließen. Diese lassen sich beispielsweise durch das Degradieren des ersten Beckens B1 beziehungsweise durch das Degradieren des zweiten Beckens B2 im kinetischen Batteriemodell 6 darstellen und somit der Ausgangsfüllstände der Becken B1, B2 mit beziehen. Die Beckenbreiten c, 1-c können sich somit ändern. Das erste Becken B1 weist insbesondere die erste Beckenbreite c auf, das zweite Becken y2 weist insbesondere die zweite Beckenbreite 1-c auf. Weiterhin kann die Alterung auch beispielsweise über sukzessive Erhöhung der Widerstände, beispielsweise des ohmschen Widerstands R₀, im ersatzschaltbildbasierten Modell 7 inkludiert werden.

Da die verschiedenen Batteriesysteme 3 letztendlich in die Simulation größerer Energiesystemverbünde eingebettet werden sollen, ist es erforderlich auch zugehörige Peripheriegeräte 9 und Betriebsweisen der Zelltypen in dem Simulationsmodell 1 zu betrachten. Bei bisher vorhandenen Ansätzen dieser Modellierung wird dies meist nicht berücksichtigt, sondern die Einzelzelle entkoppelt von diesen betrachtet. Jedoch ist insbesondere das Verhalten des Gesamtsystems, also des gesamten Batteriesystems 3, unter Berücksichtigung der Wechselwirkung mit verbauten Zusatzsystemen und nicht das isolierte Einzelverhalten interessant. Bei dem vorgestellten Verfahren wird somit dem Peripherieeinfluss Rechnung getragen. Konkret kann beispielsweise mittels des Peripheriegerätes 9 das jeweilige Simulationsmodell 1 um die erforderlichen Gerätschaften zum automatisierten Betrieb erweitert werden, wie beispielsweise Pumpen, Heizungs- und Kühlungsvorrichtungen oder auch Batteriemanagementsysteme. Ferner können hier auch zyklische Wartungs- und Instanthaltungsintervalle in das Simulationsmodell 1 eingebunden werden. Insbesondere kann eine Vielzahl von Peripheriegeräten 9, insbesondere unterschiedliche Peripheriegeräte, mit simuliert werden.

Zur Erzeugung der Parametrierung für das kinetische Batteriemodell 6 kann eine Messdatenerhebung durchgeführt werden. Das kinetische Batteriemodell 6 muss mit Parameter c, welches das relative Fassungsvermögen beziehungsweise die Beckenbreite c, 1-c der Becken B1, B2 extrahierbarer und nicht extrahierbarer Ladung definiert, sowie der Übertrittsrate k, also den zeitlichen Verlauf des Übergangs von Ladungsträgern zwischen den Becken B1, B2 quantifiziert werden, jeweils für Ladung und Entladung. Zur Identifikation von c und der Übertrittsrate k ist die betrachtete Speichereinheit, also die virtuelle Spannungsquelle 4, in mehreren Teilmessungen vom kleinstmöglichen bis zu größtmöglichen Entladestrom beziehungsweise die C-Rate zu beaufschlagen, welche messtechnisch erfassbar beziehungsweise laut Herstellerangaben zulässig sind, sodass sich ein Verlauf der maximal extrahierbaren Leistung als Funktion des Entladestroms ergibt. Die Speichereinheit ist dazu aus dem vollgeladenen Zustand in Constant-Current-Entladung bis zum Erreichen der Abschaltspannung (Cut Off Voltage) zu entladen. Hierbei sind Entladestrom (DC-seitig) und Klemmspannung V_{Batt} im Zeitverlauf, insbesondere sekündlich, sowie die maximal entnommene Kapazität zu erfassen. In gleicher Weise sind Ladungen des Speichers durchzuführen, jedoch ist die Constant-Current-Ladephase eine Constant-Voltage-Ladung zum Erreichen des Ladeanschlussstroms anzuschließen.

Für die Verknüpfung des kinetischen Batteriemodells 6 mit dem ersatzschaltbildbasierten Modell 7 kann ebenfalls eine Messdatenerhebung durchgeführt werden. Die Kopplung dieser Modellteile erfolgt über die Ruhespannungsbestimmung V_{OC} in Abhängigkeit des durch das kinetische Batteriemodell 6 bestimmten SOC. Die Ruhespannungskennlinie V_{OC} (SOC) wird durch Mittelung der Klemmspannungsverläufe jeweils bei Ladung und Entladung angenähert. Hierfür muss die Klemmspannung V_{Batt} über einen kompletten Lade-/Entladezyklus für die geringstmögliche Lade-/Entladeströmung (DC-seitig) beziehungsweise die geringstmögliche C-Rate erfasst werden. Als weitere Möglichkeit und/oder zur Verifikation der Näherung durch Mittelung beziehungsweise durch Bezifferung des dabei gemachten Fehlers ist die Ruhespannungskennlinie V_{OC} (SOC) zum Vergleichen mit Hilfe des Stützstellenverfahrens zu ermitteln. Hierzu ist die Speichereinheit schrittweise zu Auf- und Entladen (zum Beispiel in 5% SOC-Schritte). Zwischen den einzelnen Lade- und Entladeschritten ist die Ruhepause von beispielsweise mindestens einer Stunde einzuhalten bis alle dynamischen Reaktionen weitestgehend abgeklungen sind und sich in etwa die Ruhespannung für den jeweiligen SOC-Stand einstellt. Daraus ergibt sich eine Schnittstelle, welche in Verknüpfung mit den anderen erfassten Schnittstellen die Ruhespannungskennlinie V_{OC} (SOC) darstellt.

Zur Modellierung des ersatzschaltbildbasierten Modells 7 können ebenfalls Messdaten erhoben werden. Das ersatzschaltbildbasierte Modell 7 mit einem RC-Glied wird über die Bestimmung der Ersatzschaltbildkomponenten parametriert, die sich beispielsweise aus dem Innenwiderstand R₀, Widerstände und Kapazitäten der RC-Glieder ergeben. Diese können in Abhängigkeit des SOC aus der Antwort der Klemmspannung V_{Batt} aus einer galvanostatischen Impulsmessung bestimmt werden. Die Impulsmessungen sind in mindestens 10% von SOC-Intervallen so vorzunehmen, dass der Relaxationsverlauf der Klemmspannung V_{Batt} nach Stromimpulsen DC-seitig sowohl für Lade- als auch Entladebetrieb sekündlich erfasst wird. Um die Temperaturabhängigkeit der Parameter zu bestimmen, ist diese Messung nach Möglichkeit über ein anwendungsrelevantes Temperaturspektrum, beispielsweise über einen Temperaturbereich von 0° Celsius bis 40° Celsius in Teilmessungen bei 0° Celsius, 10° Celsius, 25° Celsius und 40° Celsius durchzuführen. Zwischen den Stromimpulsen ist eine Relaxationsphase von zum Beispiel mindestens einer halben Stunde vorzusehen.

Für eine thermische Modellierung können weiterhin Messdaten erhoben werden. Zur Parametrierung der thermischen Modellierung sind nach Möglichkeit die Außentemperatur, die Temperatur im Systeminneren und Energiebedarf der Systemtemperierungsvorrichtungen (je nach Technologie Heiz- oder Kühlvorrichtung) für alle oben genannten Messungen im Zeitverlauf festzuhalten. Weiterhin sind für jedes System die Reaktionswärmeentwicklung bei Lade- und Entladevorgang sowie Wärmeübergangskoeffizienten der Hüllmaterialien des Zellkörpers zur Umgebung zu quantifizieren.

Zur Modellierung der Peripheriegeräte 9 können ebenfalls Messdaten erhoben werden. Nach Möglichkeit sind die Leistungsbezüge aller Peripheriegeräte 9, wie beispielsweise das Batteriemanagementsystem, Lüfter, Heizung, Pumpen, Steuerelektronik jeweils separat und für alle obigen Messungen in Abhängigkeit der Betriebsbedingungen, beispielsweise Außentemperatur, C-Rate/Entladestrom, zu erfassen. Falls dies nicht möglich ist, sind hinlänglich exakte Abschätzungen der Leistungsbezüge für alle parasitären Verbraucher einzeln - oder wenn dies ebenfalls nicht möglich aggregiert -anzugeben.

Mit anderen Worten ist erfindungsgemäß vorgesehen, dass zum einen die Modifikation des kinetischen Batteriemodells 6 durchgeführt wird, nämlich die Anpassung der Übertrittsrate k in der Constant-Voltage-Phase gemäß des Ladestroms i(t) in jedem Zeitschritt. Hierdurch kann die Dauer der Constant-Voltage-Ladephase der Zelle exakter bestimmt werden als durch bisheriges Vorgehen einer Fit-Annäherung mit Hilfe einer rudimentären e-Funktion. Somit wurde der SOC und Laufzeit-bestimmende Part des gesamten Modellierungskonzepts modifiziert hin zu einer praxisnahen und anwendungstauglichen Variante des kinetischen Batteriemodells 6.

Des Weiteren ist ein vereinheitlichtes DC-seitiges Modellierungskonzept für wirtschaftlich relevante elektrochemische Speicher sowie die Anwendbarkeit dessen auf sowohl Zell- als auch Systemebene realisiert. Das Konzept abstrahiert die elektrochemischen Vorgänge in der Zelle durch wenige äquivalente mathematisch physikalische Ausdrücke für eine einfache Handhabung, bietet aber durch die Abbildung des Ladezustands inklusive Strom-Spannungsverhaltens der Zelle unter Berücksichtigung von internen Verlusten sowie durch Peripheriegeräte 9 hervorgerufene Verluste einen größeren Informationsgehalt als eine rein Leistungsfluss-basierte High-Level-Betrachtung, mit Wirkungsgraden. Ein Vorzug dieses Konzepts ist die Tatsache, dass mit einer einzigen Basisstruktur von überschaubarer Komplexität ein Simulationsmodell 1 verschiedener Speicherchemien universell erstellt werden kann. Durch das Baukasten-Prinzip ist es leicht realisierbar, Anpassungen für jede Zelltechnologie zu treffen. Die im Stand der Technik als relevant erachteten Aufgaben beispielsweise nicht-lineare Effekte zu berücksichtigen werden erfindungsgemäß gelöst, das heißt sowohl Temperaturabhängigkeiten, Alterungs- und Selbstentladungseffekte als auch der C-Raten-abhängige Rate Capacitiy Effect sowie der Recovery Effect werden berücksichtigt. Die baukastenähnliche Konzeptionierung ermöglicht es in jeder Arbeitsphase lauffähige Zwischenergebnisse bereitzustellen und in den finalen Modellversionen durch an- und abwählbaren Funktionsumfang die Komplexität der Simulation flexibler anzupassen, wodurch auch die Simulationsdauer beeinflusst werden kann. Der Aufwand zur Parametrierung wird aufgrund standardisierter Messmethodik für jedes Batteriesystem 3 so gering wie möglich gehalten. Von der Einzelzelle ausgehend kann die Modellierung auf Gesamtsystemebene hoch skaliert werden, indem die internen Verschaltungen der Einzelzellen sowie die parasitären Peripheriegeräte 9 berücksichtigt werden. Somit realisiert die beschriebene Herangehensweise leistungsfähige, verhältnismäßig leicht parametrierbare und hinreichend exakte Softwareabbildungen verschiedener Speichertypen.

FIG 2 zeigt in einem Ladestrom-Übertrittsraten-Diagramm schematisch die Abhängigkeit des Ladestroms i(t) mit der Übertrittsrate k. Auf der Ordinate O ist insbesondere der Ladestrom i(t) in Ampere angegeben und auf der Abszisse A ist insbesondere die Übertrittsrate k in Sekunden⁻¹ angegeben. Insbesondere zeigt die FIG 2, dass die Übertrittsrate k in Abhängigkeit einer polynomiellen oder einer exponentiellen oder einer hyperbolischen Funktion für die Übertrittsrate k bestimmt werden kann. Insbesondere ist der Zusammenhang der Übertrittsrate k mit dem Ladestrom i(t) in Abhängigkeit von idealisierten Übertrittsratenwerten und Ladeströmen i(t) am Ende der Constant-Current-Ladephase vorliegend durch eine exponentielle Funktion dargestellt. In FIG 2 ist dies exemplarisch für einen Zelltyp wiedergegeben. Die genaue Abhängigkeit kann dabei vom Typ der Batteriezelle und dem genauen Fabrikat abhängen. Insbesondere zeigt Fig. 2 den idealisierten Übertrittsratenverlauf des Ladeprozesses während einer Constant-Voltage-Phase.

Hierbei kann die Simulation insbesondere mittels eines Prozessors ausgeführt werden, insbesondere mittels einer Recheneinheit der elektronischen Recheneinrichtung 2 ausgeführt werden.

Die elektronische Recheneinrichtung 2 kann insbesondere einen Computer, einen Mikrocontroller oder einen integrierten Schaltkreis umfassen. Alternativ kann die elektronische Recheneinrichtung 2 einen realen oder virtuellen Verbund von Computern umfassen (ein englischer Fachbegriff für einen realen Verbund ist "Cluster", ein englischer Fachbegriff für einen virtuellen Verbund ist "Cloud").

In diesem Ausführungsbeispiel umfasst die elektronische Recheneinrichtung 2 zumindest eine Schnittstelle, einen Prozessor und eine Speichereinheit. Bei einer Schnittstelle kann es sich um eine Hardware- oder Softwareschnittstelle handeln (beispielsweise PCI-Bus, USB oder Firewire). Eine Recheneinheit kann Hardware-Elemente oder Software-Elemente aufweisen, beispielsweise einen Mikroprozessor oder ein sogenanntes FPGA (englisches Akronym für "Field Programmable Gate Array"). Eine Speichereinheit kann als nicht dauerhafte Arbeitsspeicher (Random Access Memory, kurz RAM) oder als dauerhafter Massenspeicher (Festplatte, USB-Stick, SD-Karte, Solid State Disk) realisiert sein.

Wo noch nicht explizit geschehen, jedoch sinnvoll und im Sinne der Erfindung, können einzelne Ausführungsbeispiele, einzelne ihrer Teilaspekte oder Merkmale mit einander kombiniert bzw. ausgetauscht werden, ohne den Rahmen der hiesigen Erfindung zu verlassen. Mit Bezug zu einem Ausführungsbeispiel beschriebene Vorteile der Erfindung treffen ohne explizite Nennung, wo übertragbar, auch auf andere Ausführungsbeispiele zu.

Insgesamt zeigt die Erfindung ein generisches Modellkonzept zur Simulation von elektrochemischen Speichern auf Systemebene.

### Bezugszeichenliste

- 1: Simulationsmodell
- 2: elektronische Recheneinrichtung
- 3: Batteriesystem
- 4: virtuelle Spannungsquelle
- 5: virtuelle Filtereinrichtung
- 6: kinetisches Batteriemodell
- 7: ersatzschaltbildbasiertes Modell
- 8: Tiefpassfilter
- 9: Peripheriegerät
- A: Abszisse
- B1: erstes Becken
- B2: zweites Becken
- c: erste Beckenbreite
- 1-c: zweite Beckenbreite
- C: Ladungskapazität
- C₁: Kondensator
- h1: erste Füllhöhe
- h2: zweite Füllhöhe
- i(t): Ladestrom
- i_{Batt}: Klemmstrom
- i₁: Tiefpassstrom
- k: Diffusionsrate
- O: Ordinate
- R₀: Widerstand
- R₁: Widerstand
- V_{OC (SOC)}: Ruhespannungskennlinie
- V₁: Tiefpassspannung
- V_{Batt}: Klemmspannung
- y1: erste Ladungsmenge
- y2: zweite Ladungsmenge

## Patentansprüche

1. Verfahren zum Simulieren eines Batteriesystems (3) mit zumindest einer virtuellen Spannungsquelle (4) des Batteriesystems (3) und zumindest einer virtuellen Filtereinrichtung (5) des Batteriesystems (3) mittels eines Simulationsmodells (1) einer elektronischen Recheneinrichtung (2), bei welchem die virtuelle Spannungsquelle (4) durch ein kinetisches Batteriemodell (6) mit einer vorgebebenen Übertrittsrate (k) und die Filtereinrichtung (5) mittels eines ersatzschaltbildbasierten Modells (7) simuliert werden,
**dadurch gekennzeichnet, dass**
die Übertrittsrate (k) während eines simulierten Ladeprozesses des Batteriesystems (3) in Abhängigkeit eines simulierten Ladestroms (i(t)) vorgegeben wird.

2. Verfahren nach Anspruch 1,
**dadurch gekennzeichnet, dass**
die Übertrittsrate (k) aktuell an den aktuell simulierten Ladestrom (i(t)) angepasst wird.

3. Verfahren nach einem der vorhergehenden Ansprüche,
**dadurch gekennzeichnet, dass**
die Übertrittsrate (k) in Abhängigkeit einer polynomiellen oder einer exponentiellen oder einer hyperbolischen Funktion für die Übertrittsrate (k) bestimmt wird.

4. Verfahren nach einem der vorhergehenden Ansprüche,
**dadurch gekennzeichnet, dass**
die Übertrittsrate (k) in Abhängigkeit eines zu simulierenden Batteriesystems (3), insbesondere in Abhängigkeit eines Batteriezellentyps, bestimmt wird.

5. Verfahren nach einem der vorhergehenden Ansprüche,
**dadurch gekennzeichnet, dass**
die Filtereinrichtung (5) mit zumindest einem Tiefpassfilter (8), insbesondere mit zumindest zwei Tiefpassfiltern (8), simuliert wird.

6. Verfahren nach einem der vorhergehenden Ansprüche,
**dadurch gekennzeichnet, dass**
durch Parametrierung der Filtereinrichtung (5) eine Temperaturabhängigkeit und/oder ein Selbstentladungseffekt simuliert werden.

7. Verfahren nach einem der vorhergehenden Ansprüche,
**dadurch gekennzeichnet, dass**
eine zyklische Zellalterung des Batteriesystems (3) und/oder eine kalendarische Zellalterung des Batteriesystems (3) durch ein Degradieren eines ersten Beckens (B1) des kinetischen Batteriemodells (6) und/oder durch ein Degradieren eines zweitens Beckens (B2) des kinetischen Batteriemodells (6) simuliert werden.

8. Verfahren nach einem der vorhergehenden Ansprüche,
**dadurch gekennzeichnet, dass**
eine zyklische Zellalterung des Batteriesystems (3) und/oder eine kalendarische Zellalterung des Batteriesystems (3) durch eine Erhöhung zumindest eines ohmschen Widerstands (R₀) der Filtereinrichtung (5) simuliert werden.

9. Verfahren nach einem der vorhergehenden Ansprüche,
**dadurch gekennzeichnet, dass**
bei der Simulation des Batteriesystems (3) zumindest eine Auswirkung zumindest eines Peripheriegeräts (9) für das Batteriesystem (3) berücksichtigt wird.

10. Computerprogrammprodukt, umfassend Befehle, die bei der Ausführung des Programms durch einen Computer diesen veranlassen, die Schritte des Verfahrens nach einem der Ansprüche 1 bis 9 auszuführen.

11. Elektronische Recheneinrichtung (2) mit einem Computerprogrammprodukt, wobei die elektronische Recheneinrichtung (2) zum Durchführen eines Verfahrens nach einem der Ansprüche 1 bis 9 ausgebildet ist.
